# EUROPEAN PATENT APPLICATION

(11) **EP 1 909 233 A1**
(43) Date of publication of application: **09.04.2008**
(21) Application number: 07019331.3
(22) Date of filing: 02.10.2007
(51) Int. Cl.: G07B 17/00

(54) **System and method for automating the use of postal products in a networked environment**

(30) Priority: 04.10.2006 US 849552 P; 10.05.2007 US 801599
(71) Applicant: PITNEY BOWES INC., Stamford, CT 06926-0700 (US)
(72) Inventor: Pintsov, Leon A., West Hartford Connecticut 06117 (US); Obrea, Andrei, Seymour Connecticut 06483 (US)
(74) Representative: HOFFMANN EITLE

(57) **Abstract**

A formal mechanism for defining a broad variety of postal products using measurable attributes. The mechanism for the products then may be formalized into data structures and procedures executable by computer systems (100). Once the above is executed an automated production is established for the mail unit and suitable for delivery of the new services to assist postal operators in effective execution of all operations specified by the services selected. In order to fulfill the mailer's requirement as expressed in computer processible format and captured by the mailer's computer (100) the software may make decisions regarding the creation and sending of each mail unit. Based upon the mailer's requirements and available carrier services the mailer's computer (100) may determine the need to modify the content of the mail units and create instructions or controls for the mail units.

## Description

This Application claims the benefit of the filing date of United States Provisional Application Number 60/849,552 filed October 4, 2006, which is owned by the assignee of the present Application.

This invention relates to mailing systems and more particularly to automating the use of postal products in a networked environment.

Governments have created postal services for collecting, sorting and distributing the mail. It is difficult for government and private postal services to define and supply new services to the public. The postal service produces and performs operations on a physical item called a mail unit and obtains detailed information about operations and supplying this information to end users i.e., senders and recipients. The postal service or post office communicates product features geared to humans not machines. Humans are inefficient to change, machines more readily accept changes.

Traditional postal product like first class and standard mail can be defined and explained in simple terms and therefore end users do not have problems creating mail for first class and standard mail services. With increased sophistication of postal products and associated requirements effective use of new postal products by mailers is hindered by the lack of automation.

Even if mailers understood the features of new and more sophisticated postal products creating mail units that would meet the access requirement by the products is increasingly difficult i.e., many new products also known as valuated services require presenting a unique identifier on the mail unit and an indication of the type of service being requested. Both of the aforementioned data elements would have to be properly formatted and positioned on the mail unit in order that the postal operator can accurately capture and interpret these data elements to deliver the requested service.

Thus, one of the problems of the prior art is that the creation of the data elements involves human operations which are notoriously prone to errors.

Modern postal networks and their internal operations are designed around traditional inflexible and rigid workflows and schedules. This impedes creation and implementation of services of postal products that demand dynamic changes in postal operations, i.e., changing the route or destination for a given mail unit when it becomes clear that it is nearly impossible to deliver the mail units on time to their original destinations.

This invention overcomes the disadvantages of the prior art by automating the use of postal products in a networked environment. The invention describes a formal mechanism for defining a broad variety of postal products using measurable attributes. The mechanism for the products then may be formalized into data structures and procedures executable by computer systems. Once the above is executed an automated production is established for the mail unit and suitable for delivery of the new services to assist postal operators in effective execution of all operations specified by the services selected. In order to fulfill the mailer's requirement as expressed in computer processible format and captured by the mailer's computer the software may make decisions regarding the creation and sending of each mail unit. Based upon the mailer's requirements and available carrier services the mailer's computer may determine the need to modify the content of the mail units and create instructions or controls for the mail units.

The postal products from the senders prospective contains physical elements. The physical elements of the mail unit are physical parameters "dimensions, volume, density, material characteristics and content". Content is restricted for certain services for instance you cannot mail liquids or powders. The physical elements also include the geography of induction, geography of delivery of the mail unit, routing information, i.e., the options for selecting a route between induction and delivery points and timing and frequency of collection and delivery of the mail unit.

The informational elements of the postal product from a sender's perspective include the following: sender directed information about events that occurred during the mail unit processing; sender directed information about other mail units that are directly linked to the mail unit that is being served; sender directed information about objects directly linked to the mail unit being served; customer directed information about other mail communications, sent, received or replied by sender and recipient directed information about the mail unit; and customer service provider negotiated information defining remedies for instances when service could not be delivered as specified.

The sender may also specify rules expressing desired conditions imposed on physical and informational elements.

Regarding informational elements the customer may supply directed information about events in their corresponding attributes that occurred during mail unit processing. Information describing significant changes in values of attributes of the mail unit being served, including information concerning events as deposit, delivery, receipt, impossibility of delivery, mail unit damage or discarding information concerning defects of the mail unit obtained as a result postal processing including such attributes of mail unit as its digital image or digital image of its content.

The standard of evidence required from a sender's perspective may include defining the information security services for presentation of events information to the sender in both physical and electronic format. Evidence of the data origin authentication, data integrity and privacy may also be required.

The following are other examples of events from a senders perspective: depositing of the mal unit; delivery of the mail unit into recipients mailbox; delivery of the mail unit to the recipient; refusal of the mail unit by the recipient; forwarding of the mail unit to another party; diverting and sending the mail unit to another facility; returning the mail unit to the sender; and destroying the mail unit.

Informational elements customer directed information about other mail units that are directly linked to the mail unit that is being served. Information concerning the whereabouts of reply mail units that is mail items sent by the recipient of the given mail unit as a response to receiving it. Customer directed information about other objects directly linked to the mail unit being served. Information about the structure "building, post office box" identified in the destination address, information about intended or actual recipient of the mail unit.

Informational elements. Customer directed information about other mail communications sent, received or replied to by sender or recipient. Information how many directed mail units has been replied to by the recipient identified in the address block. Recipient directed information about the mail unit. Notification about up coming delivery or problems with delivery. Any invaluable to recipient information typically not available to sender at the time of mail unit creation. Customer service provider negotiated information defining remedies when service could not be delivered as specified. Insurance for lost items or refunds for late delivery in similar occurrences and events.

The following is an example of rules from a sender's perspective. If given mail unit cannot be delivered destroy it and send the digital image of the mail unit back to the sender.

If given mail unit cannot be delivered before this date/time, return mail unit and credit mailers account. If given mail unit is located in this facility, do not deliver it but send a digital image of the content and identity of the mail unit to this e-mail address. If given mail item unit is located in this facility after this date, send mail unit to different address. If given mail unit weighs less than the given value "e.g. 20 grams." Send a digital image of the mail unit to the sender or notify the sender by electronically sending the mail unit identifier and the value of the attribute named for instance weight.

The following describes a postal product from a postal operator's perspective. The postal product contains physical elements, informational elements and rules, i.e., access requirements. The mail unit makeup "data elements, format emplacement" computerized information to accompany the mailing, its timing, messaging and protocol requirements. Grouping and containerization requirements i.e., presort and packaging rules. Pricing and payment requirements.

The term "mailer" refers to the mailer or parties acting on behalf of the mailer. Examples of tasks fulfilled by the mailer are: selection and creation of the mail units, printing the mail units, folding, inserting, franking, packing and induction of the mail units. The term "requirements" is derived from business needs and refers to desires or needs of the communicator wants, i.e., delivery time for the communication, proof of delivery, costs, color and material of the mailing envelope and insert and the availability of the color and material of the mailing envelope and insert. The term "constraints" refers to a set of restrictions imposed on the physical composition of the mail units in terms of their attributes (names, values), i.e., location and size of address block, position and encoding scheme for the identifier,. Likewise, their may be constraints on sending and receiving information in electronic form to and from other parties, i.e., timing format protocols, etc.

Fig. 1 is a system diagram of this invention with one mailer and one post; and

Figs. 2A, 2B and 2C are a flow chart describing the mailer's process flow of this invention.

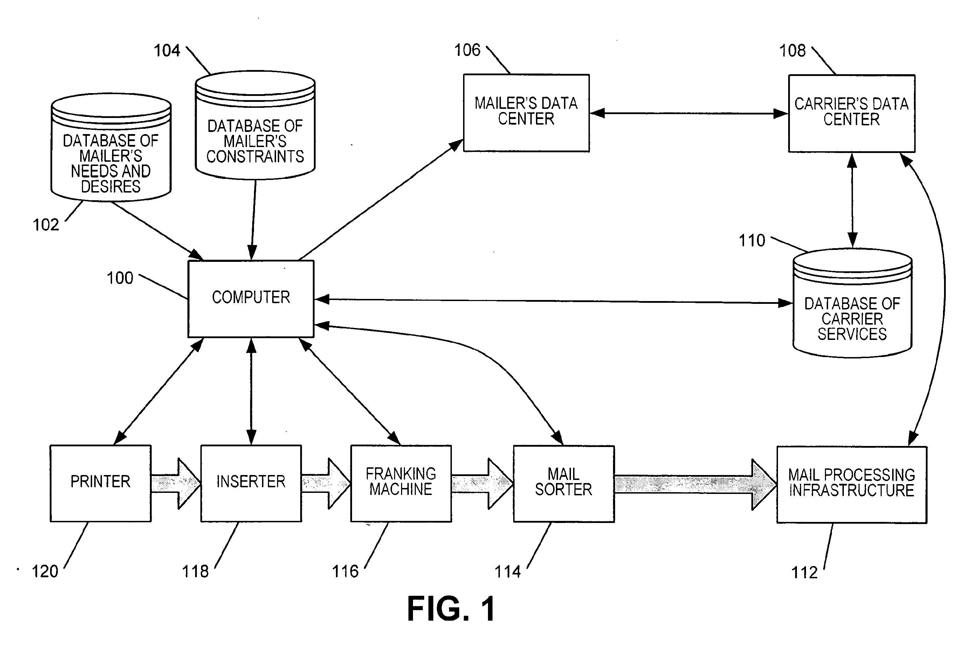

Referring now to the drawings in detail and more particularly to Fig. 1, the reference character 100 represents a computer. Computer 100 may be a mailer's computer, a carrier's computer, or a third party computer. Computer 100 is coupled to database of mailer's needs and desires 102, data base of mailer's constraints 104, mailer's data center 106 printer 120, inserter 118, franking machine 116, mail sorter 114, and data base of carrier services 110. Database of carrier services 110 is coupled to carrier's data center 108. Mail processing infrastructure 112 is coupled to carrier's data center 108.

Database of mailers needs and desires 102 contains formal computer processable information regarding the mailer's requirements. For instance, information regarding the delivery time for the communication, proof of delivery, costs, color and material of the mailing envelope and insert, availability of the color and material of the mailing envelope and insert of the of the mail units. Database of mailer's constraints 104 contains formal computer processable information regarding the mailer's, requirements i.e., a set of restrictions imposed on the physical composition of the mail units in terms of their attributes, i.e., location and size of address block, position and encoding scheme for the identifier, color and material of the mailing envelope and insert. Likewise, in database 104 there may be constraints on sending and receiving information in electronic form to and from other parties, i.e., timing format protocols, etc. Database 110 contains a formal description of carrier's products and services i.e., rules pertaining to what mail units may be sent and what they may contain, i.e., delivery time, area of collection and delivery, how sorted, read, print, unbundled, bundle, price, etc.

After computer 100 receives information from databases 102, 104 and 110 computer 100 instructs printer 120, inserter 118, franking machine 116 and mail sorter 114 of the manner in which computer wants the mail units to be created and sorted. Printer 120 will print the envelopes and one or more inserts that comprise the mail units in the format indicated by computer 100 on the color and type of paper instructed by computer 100. Then inserter 118 will insert one or more inserts into an envelope and seal the envelope to form a mail unit. Franking machine 116 will then apply postage to the mail units and/or prepare a carrier manifest. At this point mail sorter 114 will sort the mail units into some sortation pattern that is desirable by the carrier, i.e., tray the mail units according to zip code, bundle the mail units according to a geographic pattern, bundle the mail units as to requested carrier service, unbundled the mail units, etc.

Computer 100 will transmit to mailer; data center 106, information regarding the composition of the mailing units and the fees and/or postage paid for the mailing units and data center 106 will transmit the forgoing information and postage funds to carrier's data center 108. The output of mail sorter 114 will be inducted into mail processing infrastructure 112 so that the carrier may further process and deliver the mail units to their intended recipient's.

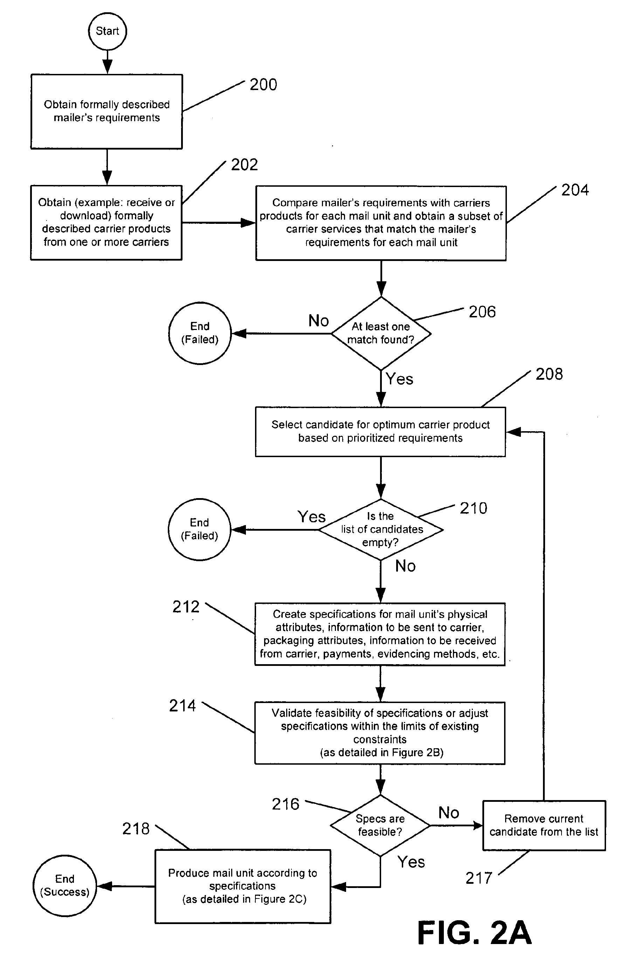

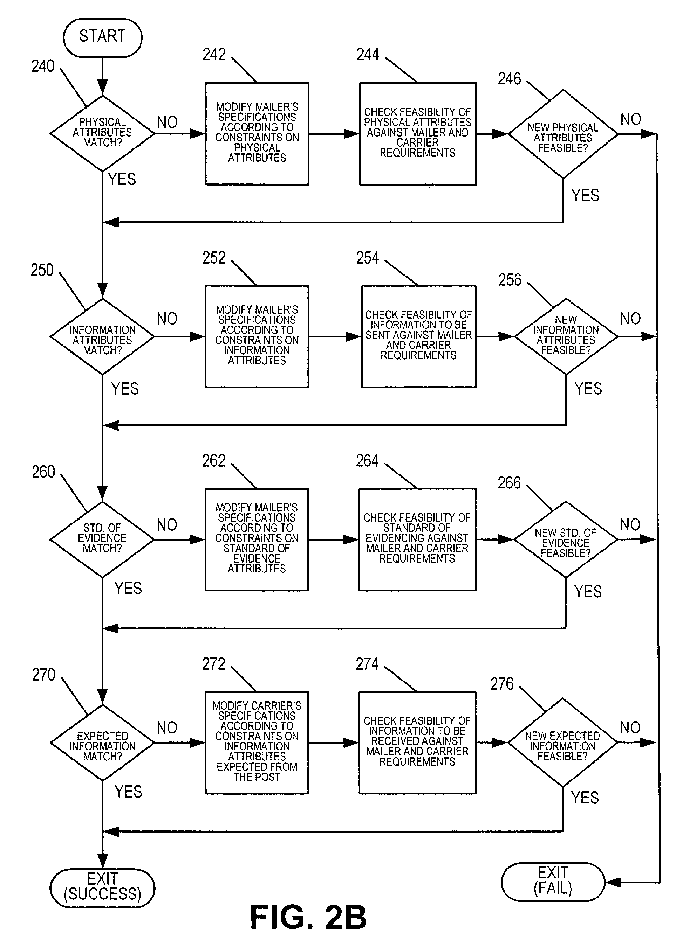

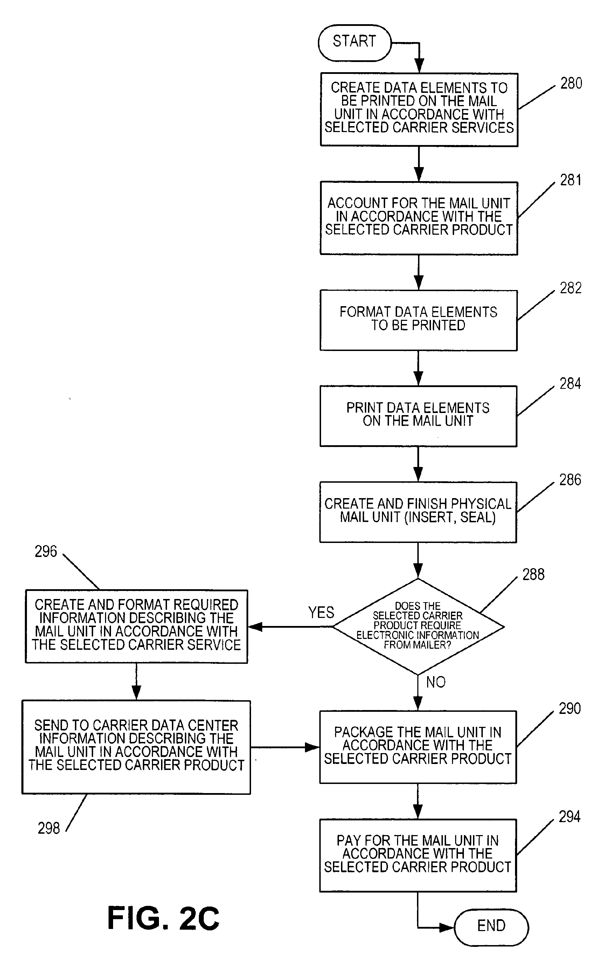

Individual steps described in Figs. 2A, 2B, and 2C may be implemented in more than one computer. For example in Fig. 2A step 214 may be implemented in computers that are used to supervise the production of mail units, while steps 212, and 216 may be implemented in computers that belong to other functions in the organization i.e., IT, marketing, etc. at the same or different locations. Similarly, computers that together implement the workflow described in Figs. 2A, 2B, and 2C may belong to more than one party. For example, steps 200, 202, 204, 206, 208, 210 and 212 may be outsourced to a third party and thus, the aforementioned steps may be implemented on a separate computer which is operated by the third party.

Fig. 2A describes what is done for one mail unit. The process is repeated for all desired mail units. After the process starts, in step 200 formally described mailer's requirements are obtained and stored in database of mailer's needs and desires 102. Then in step 202 formally described carrier products from one or more carrier's are obtained and stored in data base of mailer's constraints 104. Step 204 compares the mailer's requirements with the carrier's products for each mail unit and obtains a subset of carrier services that match the mailer's requirements for each mail unit. A match refers to the proximity between a mailer's requirement and the carrier's products based on specified criteria. The foregoing is accomplished utilizing computer 100 and database of carrier services 110.

At this point step 206 determines whether or not there is at least one carrier service acceptable to the mailer for each mail unit. If step 206 determines that there is not at least one carrier service acceptable to the mailer for each mail unit the process ends. If step 206 determines that there is at least one carrier service acceptable to the mailer for each mail unit the next step will be step 208. Step 208 selects a candidate for optimum carrier product based upon prioritized requirements. In cases where there is more than one choice of carrier products selection is made in step 208 based on prioritized requirements.

Then step 210 determines whether or not the list of candidates is empty. If step 210 determines that the list is empty the process ends. If step 210 determines that the list is not empty the process goes to step 212. Step 212 creates specifications for mail unit's physical attributes, information to be sent to the carrier, packing attributes, information to be received from the carrier, payments, evidencing methods, etc. Next step 214 validates the feasibility of the specification or adjusts the specification within the limits of existing constraints. The foregoing is more fully described in the description of Fig. 2B.

Now step 216 determines whether or not the specifications are available. If step 216 determines that the specification is not available the process goes to step 217. Step 217 removes the current candidate from the list. Then the process goes back to step 208. If step 216 determines that the specification is available the process goes to step 218. Step 218 produces the mail unit according to the specifications, which is more fully described in the description of Fig. 2C. Then the process ends.

After the process starts in Fig. 2B decision step 240 determines whether or not the physical attributes of the mail units match the operations constraints of the mail units. If step 240 determines that the physical attributes of the mail units do not match the operations constraints of the mail units, the next step will be step 242. Step 242 modifies the mailer's specifications according to the constraints on the physical attributes. Then step 244 checks the feasibility of the physical attributes against the mailer's and carrier requirements. Then step 246 will determine whether or not the new physical attributes are feasible. If step 246 determines that the physical attributes are not available the process will fail and go to step 217 (Fig. 2A). If step 240 determines that the physical attributes of the mail units match the operations constraints of the mail units or step 246 determines that the new physical attributes are feasible, step 250 will be the next step in the process.

Step 250 determines whether or not the information attributes match. If step 250 determines that the information attributes do not match, the next step will be step 252. Step 252 modifies the mailer's specifications according to constraints on information attributes. Then step 254 checks the feasibility of information to be sent against mailer and carrier requirements. Now step 256 will determine whether or not the new information attributes are feasible. If step 256 determines that the new information attributes are not available the process will fail and go to step 217 (Fig. 2A). If step 250 determines that the information attributes of the mail units match the operations constraints of the mail units or step 256 determines that the new information attributes are feasible, step 260 will be the next step in the process.

Step 260 determines whether or not the standard of evidence match. If step 260 determines that the standard of evidence do not match, the next step will be step 262. Step 262 modifies the mailer's specifications according to constraints on the standard of evidence attributes. Then step 264 checks the feasibility of standard of evidence against mailer and carrier requirements. Now step 266 will determine whether or not the new standard of evidence is feasible. If step 266 determines that the new standard of evidence is not feasible the process will fail and go to step 217 (Fig. 2A). If step 260 determines that the standard of evidence match or step 266 determines that that the new standard of evidence is feasible, step 270 will be the next step in the process.

Step 270 determines whether or not the expected information match. If step 270 determines that the expected information do not match, the next step will be step 272. Step 272 modifies the mailer's specifications according to constraints on information attributes expected from the carrier. Then step 274 checks the feasibility of information to be received against mailer and carrier requirements. Now step 276 will determine whether or not the new expected information is feasible. If step 276 determines that the new expected information is not feasible the process will fail and go to step 217 (Fig. 2A). If step 270 determines that the expected information match or step 276 determines that that the new expected information is feasible, the process is successful and the next step will be step 218 (Fig. 2A).

After the process starts in Fig. 2C step 280 creates and formats information to be printed on the mail unit in accordance with selected carrier services. Then step 281 accounts for the mail unit in accordance with the selected carrier product. Now step 282 formats the data elements to be printed. Then step 284 prints data elements on the mail unit. Now step 286 creates and finishes the physical mail unit (insert, seal).

At this point step 288 will determine whether or not the selected carrier product requires electronic information from the mailer. If step 288 determines that the selected carrier product requires electronic information from the mailer, step 296 will be the next step in the process. Step 296 creates and formats the required information describing the mail unit in accordance with the selected carrier service. Then step 298 sends information describing the mail unit in accordance with the selected carrier service to carrier data center 108 (Fig. 1). After the completion of step 298 or step 288 determining that the selected carrier product does not require electronic information from the mailer, the next step in the process will be step 290. Step 290 packages the mail unit in accordance with the selected carrier product. Then step 294 pays for the mail unit in accordance with the selected carrier service. Then the process ends.

The above specification describes a new and improved method for automating the use of postal products in a networked environment. It is realized that the above description may indicate to those skilled in the art additional ways in which the principals of this invention may be used without departing from the spirit. Therefore, it is intended that this invention be limited only by the scope of the appended claims.

## Claims

1. A method for producing mail units under control of a computer (100), said method comprising the steps of:
obtaining (200) by the computer (100) a description of mailer's requirements (102) and a description (202) of available carrier services in computer processable format;
comparing (204) by the computer descriptions of the mailer's requirements (102) and available carrier services to obtain a subset of carrier's services that match the mailer's requirements;
selecting (208) by the computer (100) from the subset of matching carrier services one or more carrier services for each mail unit;
making a determination (214) by the computer (100) about creating and sending each mail unit; and
creating (218) the mail units under control of the computer (100) in compliance with selected carrier services expressed in the computer processable format.

2. The method claimed in Claim 1, further including the step of:
packaging (290) the mail unit in compliance with the selected carrier service.

3. The method claimed in Claim 1, further including the step of:
accounting (281) and paying (294) by the computer (100) for each of the mail units in compliance with the selected carrier services.

4. The method claimed in Claim 1, further including the step of:
depositing the mail units into carrier's distribution network.

5. The method claimed in Claim 1, further including the step of:
creating(296, 298) and sending to a carrier data (108) center by the computer (100) information describing the mail units in accordance with the selected carrier service.

6. The method claimed in Claim 1, wherein the computer is a mailer's computer (100).

7. The method claimed in Claim 1, wherein the computer is a third party's computer.

8. The method claimed in Claim 1, wherein the computer is a carrier's computer.

9. The method claimed in Claim 1, wherein the mailer's requirements include a set (104) of mailer's constraints.
